Europäisches Patentamt

European Patent Office

Office européen des brevets

(11) Publication number: **0 092 880**
**B1**

## (12) EUROPEAN PATENT SPECIFICATION

(45) Date of publication of patent specification: **14.02.90**

(21) Application number: **83200577.1**

(22) Date of filing: **21.04.83**

(51) Int. Cl.⁵: **A 01 F 25/20**

(54) **Silage cutters.**

(30) Priority: **22.04.82 NL 8201662**

(43) Date of publication of application:
**02.11.83 Bulletin 83/44**

(45) Publication of the grant of the patent:
**14.02.90 Bulletin 90/07**

(84) Designated Contracting States:
**NL**

(56) References cited:
**DE-A-2 652 623**
**DE-A-2 715 987**
**DE-U-7 406 394**
**DE-U-7 437 516**

(73) Proprietor: **C. van der Lely N.V.**
**Weverskade 10 P.O. Box 26**
**NL-3155 ZG Maasland (NL)**

(72) Inventor: **van der Lely, Ary**
**10a Weverskade**
**NL-3155 PD Maasland (NL)**
Inventor: **Bom, Cornelis Johannes Gerardus**
**16 Laan van Nieuw Rozenburg**
**NL-3181 VC Rozenburg (NL)**
Inventor: **Hakkeling, Berend**
**19 Koningin Julianaweg**
**NL-3155 XB Maasland (NL)**

(74) Representative: **Mulder, Herman et al**
**Octrooibureau Van der Lely N.V. Weverskade 10**
**P.O. Box 26**
**NL-3155 ZG Maasland (NL)**

EP 0 092 880 B1

Courier Press, Leamington Spa, England.

## Description

The invention relates to a silage cutter comprising a support for a cutting member, said support being constructed of beams and an arm, the substantially horizointal arm extending substantially perpendicular to said beams which are also substantially horizontal in operation, and the cutting member being movable with respect to said arm and beams, the cutting member supporting a cutting element having a substantially horizontal cutting edge and being movable upwardly and downwardly with respect to the cutting member to perform cutting strokes and the cutting member being displaceable into different cutting positions along the path of a silage block to be cut from a bulk mass of silage; actuating means being provided to cause cutting strokes and displacements to succeed one another automatically in a sequence along at least a part of said path and to turn the cutting element over 90° with respect to the extension of the arm and beams respectively.

The description of a known silage cutter of this kind (DE—A—2328478) suggests the use of a stepper motor in order to perform automatic succession of cutting strokes along a straight cutting path of a periphery to be cut while a curved guide, which is adjustable along a beam supporting the cutting element, turns the cutting element over 90° at the end of the cutting path. However, provisions to stop the sequence of movements of the cutting element along the support beam when turning of the cutting element is required as well provisions to start the subsequent movement along the next cutting path are lacking, so that cutting is to be interrupted manually. Therefore, in spite of automatic cutting along straight paths of the periphery to be cut, the operator has to watch the cutting operation carefully and to take action at very particular stages of cutting. Moreover, the transition from one periphery to be cut to another periphery requires adjustment by hand.

The invention contemplates to achieve a silage cutter by means of which cutting along a whole periphery can be performed fully automatically.

According to the invention the beams and the arm are provided with position indicating switching means establishing actual positions of the cutting member with respect to the support during operation, the position indicating switching means supplying input data to an electronic circuitry controlling said automatic sequence along the whole path to be cut, without said sequence being interrupted.

The circuitry compares the positions furnished by the position indicating switching means with desired cutting positions which are introduced thereinto beforehand. This comparison results in output data controlling the transition of the cutting element. In this way, an automatic cutting sequence over the whole said periphery can be obtained, so that manual action of the operator during cutting and loss of time are avoided. This means that also high silos positioned at relative great heights can be worked without direct observations by an operator sitting in the cab of a tractor carrying the silage cutter.

The principle according to the invention also enables automatic cutting of silage along cutting paths differing from a path which corresponds to a cut block of maximum size.

Furthermore, a cut block of maximum size can be divided into a number of smaller blocks in an automatic way during transport to the stable during the time the operator has to pay his full attention to his driving activities.

For a better understanding of the present invention and to show how it may be carried into effect, reference will now be made, by way of example, to the accompanying drawings, in which:

Figure 1 is a plan view of a second embodiment of a silage cutter;

Figure 2 is a side view taken in theιdirection of the arrow II in Figure 1;

Figure 3 is a side view of an upper part of the silage cutter of Figures 1 and 2 on an enlarged scale;

Figure 4 is a plan view taken in the direction of the arrow IV in Figure 3;

Figure 5 is a sectional view taken on the lines V-V in Figure 3;

Figure 6 is a sectional view taken on the lines VI-VI in Figure 5;

Figure 7 is a sectional view taken on the lines VII-VII in Figure 5;

Figure 8 represents electronic circuitry of the silage cutter of Figures 1 to 7; and

Figure 9 is a schematic view of a silage block to be divided, showing possible positions of a cutting member of the silage cutter.

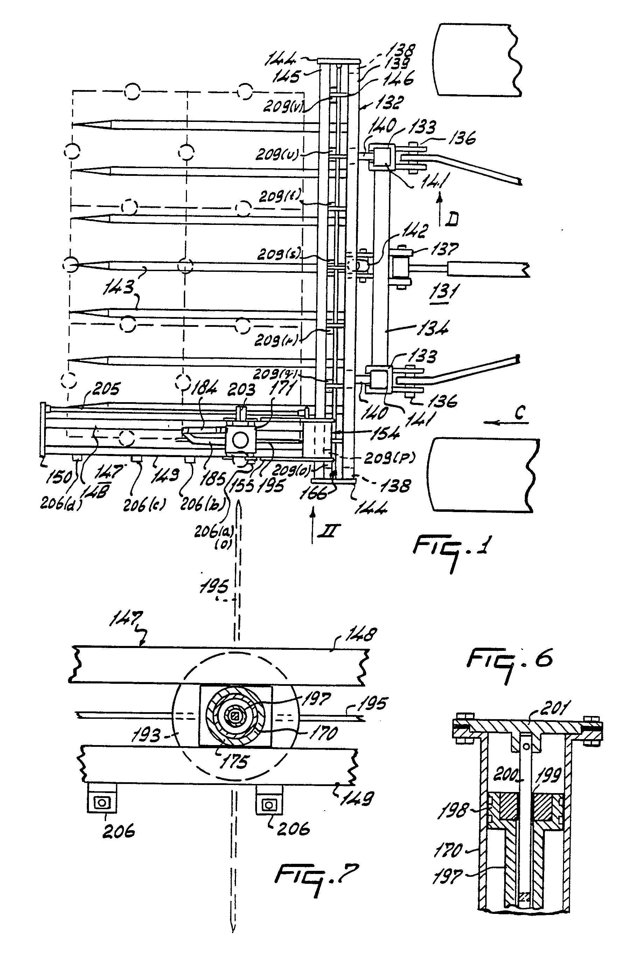

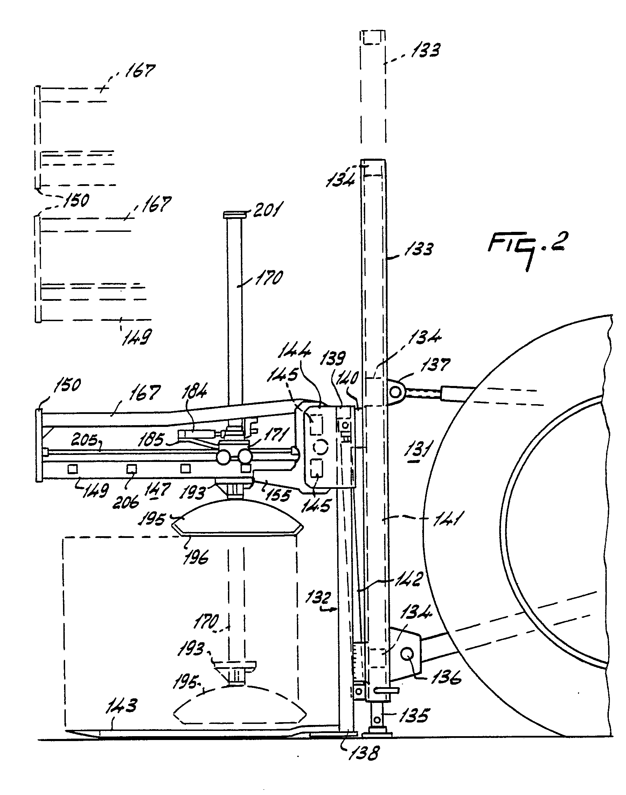

The silage cutter comprises a mast in the form of a framework 131 (Figures 1 and 2), on which a support 132 of the silage cutter is mounted for upwards and downwards movement to permit use of the silage cutter for cutting blocks from high silos, for example, at a height of 2.5 m.

The framework 131 comprises two upwardly extending, parallel columns 133 each having a channel-shaped cross-section, the side walls of the channel having at their free edges inwardly directed flanges, the edges of which are spaced apart (Figure 1). The columns 133 are interconnected by two horizontal beams 134 disposed one above the other and some distance apart to form a rigid, rectangular frámework. The framework 131 is provided at the lower ends of the columns 133 with extendable feet 135, which are fixable in a plurality of different positions (Figure 2), so that the height of the top end of the framework 131 above the ground can be raised without loading the lifting device of the tractor with which the silage cutter is coupled.

Near the lower end of each of the columns 133 there is a coupling point 136 by means of which the framework 131 can be attached to the ends of the lower lifting arms of the tractor. Near the middle of the upper beam 134 there is a coupling point 137 by means of which the framework can be fastened to the upper arm of the three-point lifting device of the tractor. The support 132 also comprises a rigid framework and extends substantially parallel to the framework 131. The support 132 comprises two upwardly extending relatively spaced and parallel beams 138, which are interconnected at their top and bottoms ends by two parallel, horizontal cross beams 139. Viewed on plan (Figure 1), the width of the support 132 exceeds that of the framework 131.

The two cross beams 139 of the support 132 are interconnected at points away from their ends by two upwardly extending, parallel supporting strips or supporting beams 140, which protrude from the support 132 towards the columns 133 of the framework 131. The distance between the supporting beams 140 corresponds with that between the columns 133 and each of the supporting beams 140 extends between the flanges of one of the channel-section columns 133. The ends of these supporting beams 140 away from the support 132 are welded to guide beams 141, each of which is a close fit in the column 133 concerned so that it can slide up and down in the space inside the column 133. In this way the support 132 can slide up and down with respect to the framework 131. This upward and downward movement is effected by a hydraulic ram 142 which is controllable from the tractor seat. The lower end of the ram bears on the middle of the lower horizontal beam 134 of the framework 131, and the end of the piston rod of the ram 142 is fastened to the underside of the middle of the upper cross beams 139 of the support 132. In this way the operator, working from the tractor seat, can shift the operative part of the silage cutter up and down the framework 131 into the desired position.

A plurality of fork prongs 143 are fastened along the length of the lower cross beam 139. The prongs project away from the lower cross beam 139 in the direction C (Figure 1). They are substantially horizontal and parallel to one another and constitute a supporting surface for a silage block to be cut. The prongs 143 are fixed immovably, at least during operation, to the lower cross beam 139 and are provided with sharp points so that they can be driven into the silage by the tractor at the desired height (if necessary after adjustment of height of the framework 131).

Mounting plates 144 are welded to the outer faces of the beams 138 of the support 132, towards the top of the beams 138 on both sides of the support 132. These mounting plates extend away from the support 132 in the direction C. To the inside faces of the two mounting plates 144 are welded two hollow carrier beams 145 located directly one above the other (Figures 1 to 3). The two carrier beams 145 are substantially horizontal and are parallel to each other and to the cross beam 139. With the support 132 they constitute a single rigid unit. Between the mounting plates 144 there are equally spaced connecting plates 146, which connect the upper carrier beam 145 to the upper cross beam 139.

The two carrier beams 145 constitute both a carrier and a guide for an arm 147, which is substantially horizontal during operation and extends normal to and away from the carrier beams 145 in the direction C. The arm 147 is displaceable along the carrier beams 145 in the direction D (Figure 1).

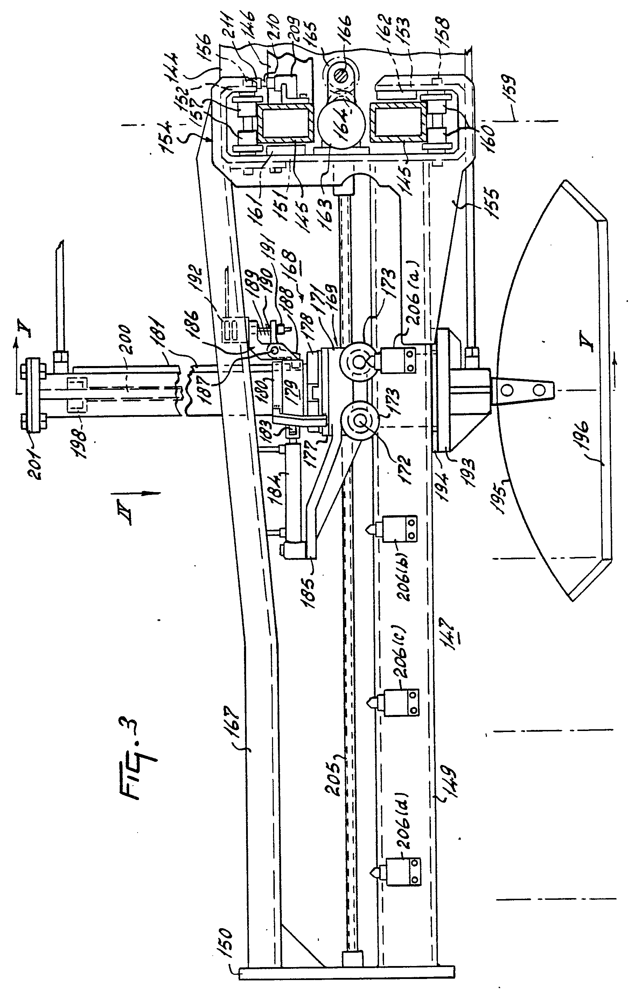

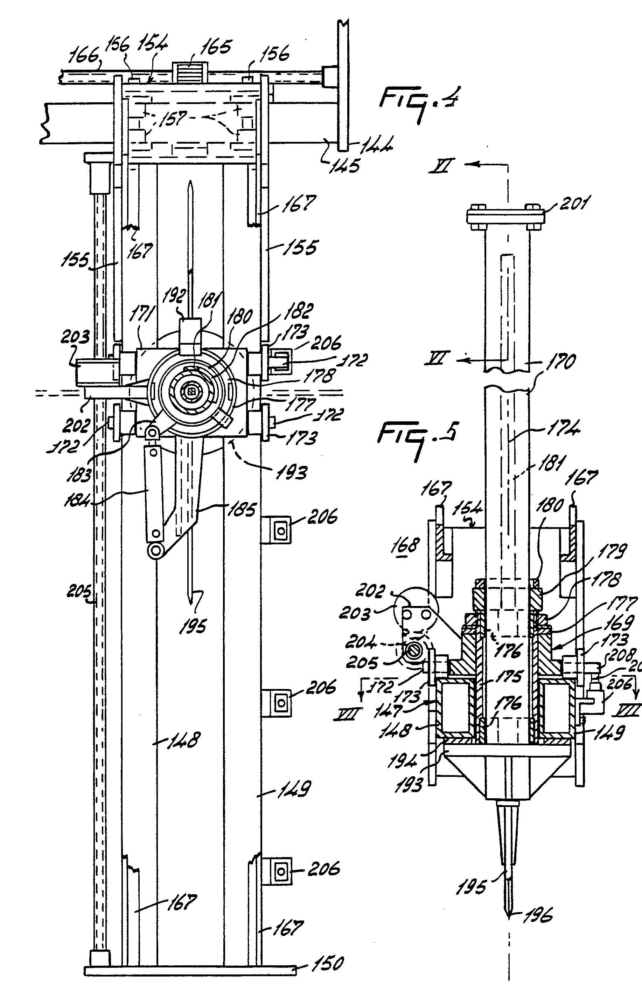

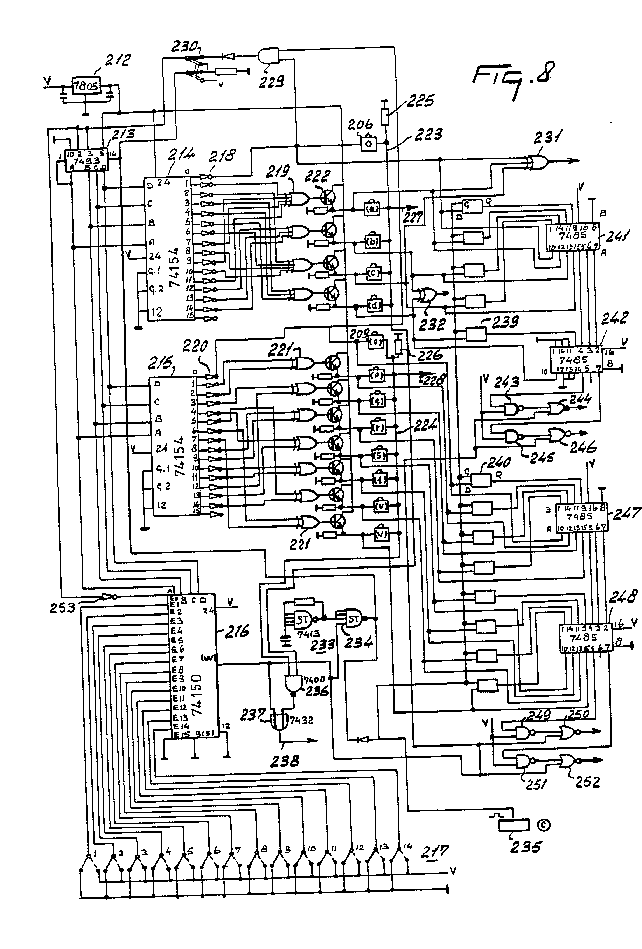

The arm 147 comprises principally two parallel hollow members 148 and 149 located side by side at some distance from each other (Figures 4 and 5). They are interconnected at their ends away from the carrier beams 145 by an upwardly extending end plate 150 (Figure 3) which projects upwardly, above the members 148 and 149. At their ends nearer the carrier beams 145 the members 148 and 149 are rigidly secured to a supporting plate 151 which extends substantially parallel to the support 132. At its upper and lower regions, located some distance above and below the members 148 and 149, the supporting plate 151 is bent over to extend horizontally in a direction away from the members 148 and 149. These horizontal portions of the supporting plate 151 are located respectively some distance above the upper surface of the upper carrier beam 145 and some distance below the underside of the lower carrier beam 145. They also have inturned flanges 152 and 153 respectively (Figure 3) in a manner such that these flanges are located at a given distance behind the rear faces of the carrier beams 145 with respect to the direction C. The upper flange 152 extends downwardly approximately to the level of the upper surface of the upper carrier beam 145 and the flange 153 extends upwardly approximately to the level of the upper surface of the lower carrier beam 145. In this way the supporting plate 151 with its rearwardly extending portions and the flanges 152 and 153 constitutes a bracket 154 which embraces the two carrier beams 145. Measured along the carrier beams 145, the width of the bracket 154 slightly exceeds the overall width of the two members 148 and 149. On its underside, the bracket 154 is provided with two reinforcing plates 155 which strengthen the connection of the members 148 and 149 to the bracket 154.

A shaft 156 is mounted between the top end of the supporting plate 151 and the flange 152. This shaft 156 is substantially horizontal during operation and two flanged rollers 157 are freely rotatable about it. The cylindrical parts of the two rollers bear on the upper surface of the upper carrier beam 145, and the two flanges of the rollers bear on the two outer faces of the upper carrier beam 145. In a similar manner, another shaft 158 is mounted between the lower end of the supporting plate 151 and the flange 153. The shaft 158 is parallel to the shaft 156 and perpendicular to an upwardly extending plane 159 about which the two carrier beams 145 are symmetrically disposed. Two flanged rollers 160 are freely rotatable about the shaft 158, the cylindrical parts of these rollers bearing on the lower face of the lower carrier beam 145, and the flanges bearing on the two outer faces of the lower carrier beam 145. Two shafts 156 with rollers 157 and two shafts 158 with rollers 160 are arranged side by side along the length of the carrier beams 145.

In the space between the supporting plate 151 and the upper carrier beam 145 there is a pressure block 161 which is mounted on the supporting plate 151. The block 161 extends over the whole width of the supporting plate 151, in the lengthwise direction of the carrier beams 145. Between the pressure block 161 and the oppositely facing surface of the upper carrier beam 145 there is a small gap. Between the lower carrier 145 and the flange 153 there is a further pressure block 162, which also covers the whole width of the supporting plate 151 and the flange 153 and which is fastened to the flange 153. Between the lower carrier 145 and the pressure block 162 there is a small gap. The pressure blocks 161 and 162 are made from pressure-resistant material, for example, nylon or the like and support the arm 147 on the carrier beams 145 in the event of an upwardly directed load on the arm.

From Figure 3 it will be apparent that in the space between the two parallel beams 145 there is an electric direct-current motor 163, which is mounted on the supporting plate 151 of the bracket 154. The motor 163, which is relatively low powered, as will be apparent hereinafter, is provided with a braking mechanism (not shown) and an output gear wheel 164 engaging the teeth of a drive element 165 in the form of a nut rotatable on a screwthreaded spindle 166 extending parallel to the carrier beams 145 over the whole distance between the two mounting plates 144, to which it is rigidly secured. The nut 165 is fixed against displacement with respect to the motor 163 in the lengthwise direction of the spindle 166.

Two relatively spaced supporting strips 167 may be provided between the top of the bracket 154 and the top of the end plate 150 for reinforcing the connection between the arm 147 and the bracket 154.

On the arm 147 can run a cutting member 168, which comprises a carriage 169 carrying a cutting cylinder 170. The cutting cylinder 170 extends upwardly and is perpendicular to the arm 147 and parallel to the plane to which the framework 131 is parallel. It is also parallel to each of the columns 133. The carriage 169 is located on the top of the arm 147 and comprises a carriage frame 171 having two pairs of axles 172 (Figures 3 to 5). Each axle 172 has a support wheel 173, each of which has a cylindrical outer face, rolling along the top of one of the members 148 or 149, and a flange which is in contact with the outer face of the member 148 or 149 concerned. The axles 172 of the wheels 173 are fastened to the carriage 169 in a manner such that the wheels on one side of the carriage bear on the top side of the member 148 and the wheels on the other side of the carriage bear on the top of the carrier 149. The carriage 169 has at the centre an opening extending substantially vertically. Into this opening extends part of the cutting cylinder 170, which extends, in the operative position, to the undersides of the members 148 and 149. This opening and the cutting cylinder 170 have a centre line located in a vertical plane 174 (Figure 5) about which the members 148 and 149 are symmetrically disposed.

The part of the cutting cylinder 170 within the carriage 169 and between the members 148 and 149 is surrounded directly by a sleeve 175, which is fastened to the carriage 169. The sleeve 175 has a bore in which the cylinder 170 is a clearance fit. Near the upper and lower ends of the bore there are insert rings 176 (for example of nylon) which slidably fit around the cylinder 170 in a manner such that the cylinder 170 is vertically displaceable with respect to the sleeve 175 (Figure 5).

A supporting ring 177 is mounted on the top of the carriage frame 171. The outer surface of the sleeve 175 projects above the supporting ring 177, and the projecting portion has a screwthread, onto which is screwed a nut 178, which engages the top of the supporting ring 177. The top end of the sleeve 175 extends above the nut 178 and receives an adjusting ring 179, which is rotatable with respect to the sleeve 175 about the centre line of the cylinder 170. The adjusting ring 179 is retained on its top side by a ring 180, which is rigidly connected, as is shown in Figure 3, with the supporting ring 177. The assembly or rings 177 and 180 locks the adjusting ring 179 in a vertical sense. The outer surface of the cutting cylinder 170 is provided with a rib 181 which extends axially from the top of the cutting cylinder to approximately midway down the adjusting ring 179 (Figure 3), when the cylinder is in the position shown in the Figures with respect to the carriage 169. The adjusting ring 179 is provided over its entire axial extent with an axial recess in which the rib 181 intimately fits. The ring 180 is provided throughout its height with a recess 182 (Figure 4) opening in the bore in the ring in which the cylinder 170 is located. The ends of the recess 182 subtend an angle of about 120° and in the position shown the rib 181 of the cylinder 170 is located at one of these ends (Figure 4).

The function of the adjusting ring 179 (as will be described more fully hereinafter) is to turn the cylinder 170 through 90° with respect to the carriage 169 by engagement of the rib 181). This pivotal movement of the cylinder 170 takes place about its centreline with respect to the ring 180 which is fixed to the carriage 169, the rib 181 moving in the arcuate recess 182 (Figure 4). The axial recess in the adjusting ring 179 in which the rib 181 is a close fit is continued to the sleeve 175 and in the sliding pieces 176 with a looser fit to enable the desired downward displacement of the cylinder 170 to take place with respect to the further part of the cutting element 168.

The adjusting ring 179 is provided with an arm 183 (Figure 4) which extends away from the arm 147 in a direction inclined to the plane 174. The free end of the arm 183 is pivotally connected to the end of the piston rod of a small cylinder 184 extending substantially parallel to the arm 147. The end of the cylinder 184 away from the arm 183 is pivotally connected by an upwardly extending pivotal shaft to the end of a supporting arm 185, which is rigidly secured to the carriage 169. The centreline of the cylinder 184, as viewed on plan (Figure 4), crosses (i.e. does not intersect) the centreline of the cylinder 170 in any of the possible positions of the cylinder 184.

On the side of the adjusting ring 179 at which the rib 181 of the cutting cylinder 170 is located, the adjusting ring 179 has rigidly secured to it an arm 186 (Figure 3), which extends upwardly from the adjusting ring 179 and carries a horizontal pivotal shaft 187, about which a pawl lever 188 is pivotable. As shown in Figure 3, the lower end of the pawl lever 188 is located in a local recess in the adjusting ring 179. This end is disposed so that the lower surface of the rib 181 of the cutting cylinder 170 can bear on its top face. The arm 186 has a horizontal top portion which is disposed above a horizontal top portion of the pawl 188. A compression spring 189 is disposed between these two top portions and surrounds a rod 190, which protrudes below the top portion of the pawl 188. The protruding portion carries a pressure piece 191, which is in contact with the underside of the top portion of the pawl 188 in the position shown. The upper end of the upwardly extending rod 190 is located inside a housing 192 and is held, at least in the position shown, in said housing by means of a releasable, electro-magnetically actuable latch which can be actuated from the driver's cab of the tractor or by means of an element associated with control means for the silage cutter to be described more fully hereinafter.

As shown in Figures 3 and 5, the cylinder 170 is provided at its lower end, below the members 148 and 149, with a thrust plate 193, which is perpendicular to the centreline of the cylinder 170 and is rigidly secured to the cylinder. The thrust plate 193 in this embodiment is circular (Figure 4). The top face of the thrust plate 193 is provided with a thrust ring 194, which is centred on the centreline of the cylinder 170. As shown in the sectional view in Figure 5, the outer diameter of the thrust ring is substantially equal to the distance between the outer vertical faces of the members 148 and 149, and the inner diameter approximately corresponds to the distance between the inner vertical faces of those members. If the position of the cylinder 170 shown in Figure 5 there is a small gap between the undersides of the members 148 and 149 and the top face of the thrust ring 194. The thrust ring 194 is made from pressure-resistant material, for example, nylon. When a cut is made in a body of silage, the cutting cylinder 170 exerts an upwardly directed reaction force on the arm 147. This brings the thrust ring 194 into contact with the members 148, 149 so that the reaction is transmitted to the arm 147 through the thrust plate 193 and the thrust ring 194 regardless of the angular position of the cylinder 170 about its centreline.

A sheet steel blade 195 is mounted on the lower end of the piston rod of the cylinder 170. As shown in Figure 3 the blade 195 is symmetrical about the region of the connection to the piston rod, i.e. about the centreline of the cylinder 170. In the position of the blade 195 shown in Figure 5, the central plane of the sheet material of the blade coincides with the plane 174. The lower boundary of the blade 195 is a cutting edge 196 which continues as upwardly sloping portions at the ends of the blade. In the illustrated position of the blade 195, the piston rod of the cylinder 170 carrying the blade is fully retracted, and the cutting edge 196 is located above the upper face of the silage to be cut.

As shown in Figure 6, which is a sectional view of the upper part of the cylinder 170, the piston rod 197 of the cylinder and the piston 198 fastened thereto are hollow, in that they both have a continuous, elongate, cylindrical hole 199 extending throughout the length of the piston 198 and the piston rod 197. The hole 199 has a non-circular cross-section, which may be, for example, rectangular or square. A rod 200, which is rigidly secured to the upper end wall 201 of the cylinder 170, extends downwardly from said cover into the hole 199. The length of the rod 200 is at least equal to the stroke of the piston and the piston rod. The rod 200 fits throughout its length in the hole 199 and has a non-circular cross-section. The hole 199 and the rod 200 are both coaxial with the cylinder 170. In operation, the rod 200 prevents the piston rod 197 and hence the blade 195 from turning about the axial centreline with respect to the wall of the cylinder 170. As shown in plan view the angular position of the cylinder 170 with respect to the support 132 unambiguously determines the orientation of the blade 195 with respect to the support.

Referring to Figure 5, the carriage frame 171 of the carriage 169 has fastened to it a laterally protruding support 202 which carries an electric direct-current motor 203 for driving, through a delay mechanism, a nut 204 which cooperates with a screw-threaded spindle 205. As shown in Figure 3, the spindle 205 is parallel to the top faces of the members 148 and 149 and extends the whole length of the members. The ends of the spindle 205 are rigidly secured respectively to the end plate 150 and to the supporting plate 151 of the bracket 154.

The vertical outer face of the member 149 is provided with contact switches 206 disposed, in the illustrated embodiment, at four locations along the member 149. The switches are operable by the cutting member 168. For this purpose, each switch 206 has a contact pin 207 (Figure 5) which can be depressed by an extension 208 of one of the wheel axles 172 of the carriage 169 as it passes over the contact pin 207 of the switch 206 concerned.

In an analogous manner, at least in this embodiment, eight contact switches 209 are mounted on the vertical side face of the upper carrier beam 145 facing the framework 131 (Figures 1 and 3). Each of the contact switches 209 also has a depressible contact pin 210, which can be actuated by an extension 211 on the underside of the flange 152 so that the contact switch 209 is actuated when the extension 211, rigidly connected with the arm 147, passes over the contact pin 210.

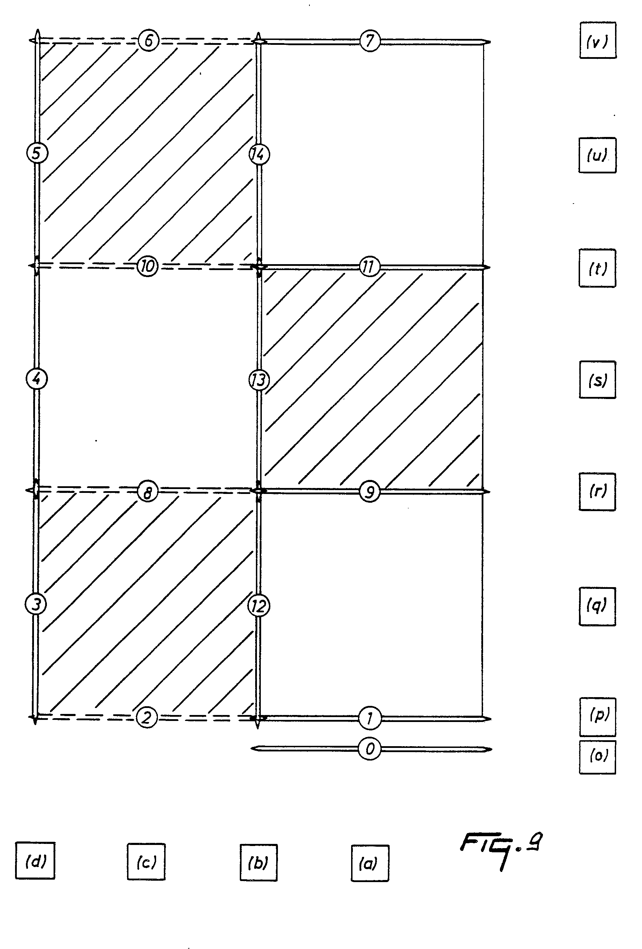

The locations of the contact switches 206 along the arm 147, in the direction away from the bracket 154, are designated by the letters $a$, $b$, $c$ and $d$ and the locations of the contact switches 209 along the upper carrier 145 and $o$, $p$ (corresponding to the position of the arm 147 in Figure 1), $q$, $r$, $s$, $t$, $u$ and $v$ in the following description of the automatic control of the cutting member 168. The two groups of letters correspond with those used in Figure 9, which schematically shows the top surface of a silage block to be cut, potential positions of the blade 195 being indicated by encircled numerals 0 to 14. The position 0 in Figure 9 corresponds with a starting position of the blade and also with a transport position of the blade, the numerals 1 to 7 to a sequence of blade positions required for separating a block of maximum size from the silage, and the numerals 8 to 14 refer to blade positions in which the separated block of maximum size can be cut into smaller blocks or in which smaller blocks can be cut from the silage without cutting out the whole block 1 to 7. Figure 9 is important for the discussion of the electronic control hereinafter.

The mechanical mode of operation illustrated in Figures 1 to 7 and 9 is as follows.

Initially the arm 147 is in position 0 which corresponds with a position along the carrier beam 145 determined by the contact switch 209 ($o$), and the position of the cutting member 168 (carriage 169) along the arm 147 is determined by the contact switch 206 ($a$). The cutting member is thus at position 0 (Figure 9). When the motor 163 is driven, the nut 165 rotates about the spindle 166 so that the whole arm 147 with the cutting member 168 runs on the rollers 157 and 160 along the carrier beams 145 until, for example, the contact switch 209 (p) stops the motor 163 in a manner to be described more fully hereinafter, the blade 195 is then in the position 1 (Figure 9). If it is desired that after the performance of a downward and upward cutting movement the blade should be displaced, for example, to the position 2, the motor 203 fastened to the carriage 169 is driven to turn the nut 204 about the stationary spindle 205 so that the carriage 169 runs on the wheels 173 along the top surfaces of the members 148 and 149 until the switch 206 (c) is depressed by the extension 208, after which the carriage and hence the whole cutting member 168 stops at the required location. Subsequently a new downward and upward cutting movement can be performed. Assuming the knife has subsequently to be directly displaced into, for example, the position 11 (Figure 9), the motor 203 (Figure 5) is driven in the reverse sense so that the carriage 169 moves towards the carrier beams 145 until the switch 206 (a) is depressed, after which the carriage 169 stops with respect to the arm 147. Approximately at the same time the motor 163 is energized so that the nut 165 rotates on the spindle 166, as a result of which the whole arm 147 together with the cutting member 168 is displaced along the carrier beams 145 until the switch 209 (t) is depressed to stop the motor 163. The movement of the carriage 171 along the arm 147 and the movement of the arm 147 along the carrier beams 145 are performed simultaneously. The blade is then in the position 11 of Figure 9.

Assuming that the blade should next be moved into the position 13 of Figure 9, in which the orientation of the blade differs by 90° from that in the position 11, the motor 163 is driven in the reverse direction so that the arm 147 together with the cutting member 168 is moved from the position $t$ (Figure 9) in a direction opposite the preceding movement until the switch 209 (s) is depressed, after which the movement of the arm 147 along the carrier beams 145 stops. Simultaneously with this movement the motor 203 is actuated so that the nut 204 rotating on the spindle 205 moves the carriage 169 towards the end plate 150 until the switch 206 (b) is depressed so that the centreline of the cylinder 170 is in the desired position 13 (Figure 9). Simultaneously with these two displacements the cylinder 184 (Figures 3 and 4) is actuated so that its piston rod is extended. The arm 183 then turns through an angle of 90°, which movement is also performed by the adjusting ring 179 and consequently also by the cylinder 170 by virtue of the cooperation of the ring 179 with the rib 181. Since the position of the piston rod 197 (Figure 6) of the cylinder 170 is fixed with respect to the cylinder by means of the rod 200, the piston rod 197 and hence the blade 195 also turn through 90° with respect to the preceding position so that, when the cylinder 170 has reached position 13 of Figure 9 the blade 195 has meanwhile attained the desired orientation. The further positions indicated in Figure 9 can be obtained in an analogous manner.

As the cylinder 170 turns about its centreline under the action of the cylinder 184, the rib 181 moves in the arcuate recess 182 (Figure 4) through the required 90° angle. The two blade positions (i.e. cylinder positions) differing by 90° are hydraulically fixed with respect to the arm 147 in a rotary sense by the cylinder 184.

Referring to Figure 9, the length of the operative cutting edge of the blade 195 is chosen so that in all active cutting positions there is a certain amount of overlap with respect to the adjacent knife positions so that the block or blocks to be cut are fully separated and no difficulty is experienced in carrying away the cut parts.

It will be appreciated from the above description of the mechanical operation concerning the movement of the cutting member 168 along the arm 147 and the movement of the arm 147 along the carrier beams 145 that the power required for the reversible electric motors 163 and 203 is very low, since it is only required for displacement purposes. As a consequence, the electric power requirements of the equipment are also relatively low.

The automated control of the cutting member 168 is represented in Figure 8 in conjunction with Figure 9.

The electronic circuitry represented in Figure 8 is built up from TTL assemblies although no high switching velocities are required. The circuitry of Figure 8 may be arranged on a single printed circuit board measuring about 20×20 cms.

It is assumed that the electric system of the tractor supplying the control circuitry is a 12 V system. Figure 8 shows only the main components of the circuitry with their connections. Subordinate elements, for example, circuitry for improvement of pulse flanks (pulse steepening), safety diodes and the like are omitted for the sake of clarity.

The integrated circuits shown in Figure 8 are designated by the numbers standardized by the manufacturers, whilst in a few cases for an integrated circuit the numbers are indicated which are standardized for the type of assembly concerned.

The circuitry of Figure 8 is fed from a voltage stabilizer 212 (type 7805), the input of which is connected to the 12 V battery of the tractor. The stabilized output voltage (nominal 5 V) feeds a binary counter 213 (type 7493) having a trigger input 14, reset inputs 2 and 3 and outputs designated by A, B, C and D suitable for 16 binary words. A binary word from the counter 213 is applied to the corresponding inputs of two 4-16-line demultiplexers 214 and 215 (type 74154), the first controlling mainly the movement of the cutting member 168 along the arm 147 and the second controlling the movement of the arm 147 along the carrier beams 145.

Each binary word of the counter 213 is also applied to corresponding inputs of a multiplexer 216 (type 74150) having an output W, the voltage of which is the inverse of that of one of the inputs E 0—E 15, that is to say, from that input which is determined by the word emanating from the counter 213. The multiplexer 216 controls mainly the cutting movement of the cutting element 168. The voltage level at the inputs E 1 to E 14 is determined by the position of the switches 217, numbered 1 to 14 corresponding to the encircled numbers in Figure 9. By means of the switches 217 the sequence of positions of the blade 195 can be controlled by the operator, in the non-operative position shown of the switches 217 said inputs all have L level. In the other position the input concerned is at H level (i.e. the 5 V output voltage of the stabilizer 212). It will, of course, be appreciated that the switches 217 may be replaced by push-buttons, each selected, depressed push-button maintaining H level at the E connection of the multiplexer 216 (by means of flipflops), but for the sake of simplification this embodiment shows a series of switches, which has, in addition, the advantage that it can afterwards be assessed which active positions of the cutting element 168 are set.

The outputs of the demultiplexer 214, numbered 1 to 14, are coupled through inverters (NOT gates) 218 with inputs of four EXOR gates 219 (type 74186) or gate combinations having an EXOR function in the following manner.

From Figure 9 it appears that the positions represented by the encircled numerals 1, 9, 11 and 7 correspond to the same position (position a) of the cutting element 168 on the arm 147. Similarly, the positions 12, 13, 14 correspond to position b, the positions 2, 8, 10, 6 correspond to position c and the positions 3, 4, 5 correspond to position d. The inputs of the uppermost gate (in Figure 8) 219 are accordingly connected to the outputs 1, 9, 11, 7 of the demultiplexer 214, those of the next lower gate are connected to the outputs 12, 13, 14 and so on. The same arrangement applies to the outputs 1 to 14 of the demultiplexer 215 connected through NOT gates 220 to the inputs of EXOR gates 221. From Figure 9 it follows that when the blade 195 is in either of the positions 1 and 2, the cutting member (and hence also the arm 147) is in the same position (position p) along the carrier beams 145. This also applies to the positions 3 and 12 of Figure 9 (position q), to the positions 8 and 9 (position r), positions 4 and 13 (position s), positions 10 and 11 (position t), positions 5 and 14 (position u), positions 6 and 7 (position v). The outputs of the NOT gates 220 associated with the outputs 1 to 14 of the demultiplexer 215 are connected in the appropriate groupings to the inputs of the gates 221. Thus the inputs of the uppermost gate 221 (in Figure 8) are connected to the outputs 1 and 2 of the demultiplexer 215, corresponding to the position p along the carrier beams 145. The inputs of the next lower gate are connected to the outputs 3 and 12 of the demultiplexer 215 and so on in accordance with the groups indicated above. The gates 219 and 221 thus represent the positions a to d, p to v of Figure 9, which positions constitute so to say a coordinate system.

The outputs of the EXOR gates 219 and 221 are connected through transistors 222 to the inputs of the contact switches 206 (Figure 3, group a to d) or, respectively, to the inputs of the contact switches 209 (Figure 1, group o to v). The outputs of the group of contact switches 206 and those of the group of contact switches 209 are earthed over a resistance 225 and 226 respectively on the printed conductors 223 and 224 respectively. The earth connection of the entire circuitry corresponds with that of the electric system of the tractor and, in general, is the tractor frame. The depression of the contact pin 207 of a switch 206 (Figure 5) or the depression of the contact pin 210 of a switch 209 (Figure 3) will shortcircuit the input corresponding to the associated transistor 222 to earth. From the printed conductor 223 earthed through the relatively high resistance 225 is branched a conductor 227 which stops the drive of the motor 203 (Figure 5), whereas from the printed conductor 224 earthed through the relatively high resistance 226 is branched the conductor 228 which stops the drive of the motor 163 (Figure 3).

The two outputs 0 of the demultiplexers 214 and 215 are connected to the inputs of an AND gate 22, the output of which can be connected through a bipolar switch 230 to the reset inputs of the counter 213. The output 0 of the demultiplexer 214 is also connected, through the associated NOT gate 218, to an input of an EXOR gate 231, the other inputs of which are connected to the input of the contact switch 206 corresponding to the position *a* and that of the contact switch 206 corresponding to the position *c*. It is noted here that as indicated in Figure 9 the blade 195 has the same cutting direction in all positions corresponding with the position co-ordinate *a* and *c*, that is to say, parallel to the longitudinal direction of the arm 147. In a similar manner the inputs of the contact switches connected to the associated transistors 222 corresponding to the positions *b* and *d* are connected to the inputs of an EXOR gate 232 in which positions the blade has to be always perpendicular to the arm 147 (positions 12, 13, 14 and 3, 4, 5 respectively in Figure 9). The outputs of the gates 231 and 232 are connected, for example, with the aid of an electro-magnetically actuated, hydraulic valve to the cylinder 184 (for pivoting the blade 195 through 90° in two directions) in a manner such that, when the output of the EXOR gate 231 becomes high, the cylinder 184 causes the blade to turn into an orientation parallel to the arm 147, whereas when the output of the gate 232 becomes high, the cylinder 184 causes the blade 195 to turn into an orientation perpendicular to the arm 147. When the cylinder 184 or the blade 195 respectively is in the desired position, the piston of the cylinder 184 is held by hydraulic pressure at the respective end wall of the cylinder serving as a stop.

The output W of the multiplexer 216 is coupled with an astable multivibrator 233 composed of two Schmitt triggers (type 7313) capable of providing pulses (even at relatively low frequencies) when the input 234 of the second Schmitt trigger is high, whereas it stops when the input 234 is low, the pulse frequency may be determined by an external circuit comprising a resistor and a capacitor as indicated in the Figure.

The output of the multivibrator 233 is connected to the trigger input of the counter 213. A proximity switch 235 is connected, through the output of the multivibrator 233, also to the pulse input of the counter 213. The switch 235 provides a pulse when the blade 195 reaches its uppermost position after termination of a cutting movement.

The printed conductors 223 and 224, to which the outputs of the contact switches 206 and 209 are connected, are connected respectively to the inputs of a NAND gate 236 (type 7400). The output of the gate 236 is connected to an input of an OR gate 237 (type 7432), the other input of which is connected to the output W of the multiplexer 216. The output 238 of the gate 237, subsequent to power amplification, actuates a hydraulic cock for controlling the admission of hydraulic fluid at working pressure to the inlet of cylinder 170.

The inverted output O of the demultiplexer 214 as well as the inputs of the contact switches 206 *a* to *d* from the transistors 222 are connected to the data inputs of five latches 239 (type 7475), the enable inputs (G) of which are connected in common to the output of the proximity switch 235. In a similar manner the inputs of the contact switches 209 (*o* to *v*) are connected to eight latches 240, the enable inputs (G) of which are connected in common to the output of the proximity switch 235. The pulses emanating from the trigger 233 are, however, prevented from reaching the enable inputs of the latches by a diode connected between the trigger 233 and the proximity switch 235.

The Q outputs of the latches 239 are each connected to a respective B input of a comparator 241 (type 7485) and, respectively, to an input of a comparator 242 cascade-connected to the comparator 241, since this type of comparator is capable of comparing binary words with, at the most, four bits. The voltage levels at the five data inputs of the latches 239 are each connected to an A input of the comparators 241 and 242, whilst unused inputs are earthed. Only those of the outputs of the comparator 242 are used which indicate that the binary value of the binary word applied to the A inputs is higher or lower than the value of the binary word applied to the B inputs. The output 5 of the comparator 242 is connected to the input of a NAND gate 243, the other input of which is maintained at a high level. The output of the gate 243 is connected to an input of a NOR gate 244, the other input of which is connected to the output W of the multiplexer 216. The output 7 of the comparator 242 is connected to the input of a combination of a NAND gate 245 and a NOR gate 246, said combination being arranged in the same manner as the group 243, 244. A high (H) signal output of the gate 244, after amplification, causes the motor 203 on the carriage 169 to be driven in a manner such that the carriage 169 moves towards the end of the arm 147 away from the carrier beams 145. When the gate 246 produces a high H signal, the motor 203 is driven in the reverse direction so that the carriage moves towards the carrier beams 145.

In a completely analogous manner the outputs of the latches 240 are connected to B inputs of cascade-connected comparators 247 and 248, whereas the outputs of the transistors 222 cooperating with the contact switches 209 are connected to the A inputs of those comparators. The output 5 of the comparator 248 is connected to an input of a NAND gate 249, the other input of which is always at H level. The output of the gate 249 is connected to an input of a NOR gate 250, the other input of which is connected to the output (W) of the multiplexer 216. When the output of the gate 250 is at H level, the motor 163 is driven, after power amplification, in a direction such that the arm 147 moves along the carrier beams 145 towards the position *v* in Figure 18. The output 7 of the comparator 248 is connected to an input of a NAND gate 251, the other input of which is always at H level. The output of the gate 251 is connected to an input of a NOR gate 252, the other input of which is connected to the output (W) of the multiplexer 216. When the output of the gate 252 is at H level, the motor 163 is driven in a direction such that the arm 147 moves along the carrier beams 145 towards the position *o*.

The input E-O of the multiplexer 216 is connected through a NOT gate 253 to the reset inputs of the counter 213 and to the shock-free switch 230, which in one position connects the reset inputs of the counter 213 to the output of the gate 229 and in the other position earths the reset inputs. The trigger input of the counter 213 is connected through the switch 230 to earth through a resistor in one position, and in the other position to H level.

In an initial position the cutting member 168 is positioned as shown in Figure 9 at O. By actuating the corresponding switches 217 for preselecting the desired cuts to be made, the operator can direct the cutting element (for cutting out a silage block of maximum size) automatically and sequentially to the positions 1, 2, 3, 4, 5, 6, 7 (as a result of which the entire block of maximum size is cut loose) or to any combination of other desired cuts, for example, 1, 2, 3, 8, 9 or 9, 13, 11 and so on (Figure 9). When a block of maximum size (positions 1 to 7) has been cut loose, further cuts, for example 8, 12, 9, 13, 10, 11, 14 (Figure 9) may be made while the cut-out block remains supported on the prongs 143, for example, during transport of the block to the feeding passage of a stable so that upon arrival the whole silage block 1 to 7 is divided into, in this case, six smaller blocks. This also solves the problem of subsequently dividing the whole silage block 1, 2, 3, 4, 5, 6, 7 afterwards by hand or by separately provided means (which would require additional investment) into small portions to permit the livestock (i.e. cattle) to consume the fodder. When the division of the large silage 4 block into small portions takes place automatically during transport to the stable, no time is lost. Of course, it is also possible to cut blocks from the silo which are smaller than the block of maximum size 1 to 7, for example, a block 1, 2, 3, 8, 9 or 1, 12, 9 or 9, 13, 10, 5, 6, 7 and so on. The numbering and hence the automatically set sequence of knife positions are chosen so that the first numbers 1 to 7 correspond to a block of maximum size, since this will be mostly the case also with regard to the desirability of cutting small blocks during the transport of the cut-out large block.

The operation of the automatic control of the cutting member 168 on the basis of a plurality of desired cuts preprogrammed by the operator will be discussed with reference to the cuts 9, 11, 13; in this example a block of small dimensions is to be cut out. The operation in the case of other preprogrammed cuts and, of course, of a whole block 1, 2, 3, 4, 5, 6, 7 is analogous. Cutting a relatively small block is in this example more illustrative because non-preselected cuts have to be skipped.

Starting with the cutting member 168 in the initial position O, the extension 208 engages the contact pin of the switch 206 (a) (with switch may be identical to the switch 206 (o)) in the depressed state and the extension 211 (Figure 3) depresses the contact pin of the switch 209 (o) (Figure 1). The switch 230 (Figure 17) is in the position shown, in which the reset inputs of the counter 213 are at H level and the counter (A, B, C, D) is at zero. Since the counter outputs are connected to the inputs of the demultiplexer 214 and 215 and to those of the multiplexer 216, the outputs O of the demultiplexers 214 and 215 are at low level and for the gates 218 at high level so that the inputs of the gate 229 are both at high level and the output of the gate 229 is also high, which output is connected, as stated above, via the switch to the reset inputs of the counter 213. Owing to the gate 253 the E-O input of the multiplexer 216 is at low level and the output (W) and also the input 234 of the Schmitt trigger 233 are at high level. The Schmitt trigger 233 then supplies pulses to the trigger input of the counter 213, but the counter does not yet respond, since its reset inputs are at H level.

It is assumed in the foregoing that the operator has operated the switches 9, 11 and 13 of the group 217 so that the inputs E-9, E-11 and E-13 of the multiplexer 216 are at H level and the further E inputs are at L level. The data input of the latch 239 corresponding to the O output of the demultiplexer 214 is at H level as well as the input of the latch 240 corresponding to the O output of the demultiplexer 215. The further latches are at L level at the inputs, whereas all latches are at L level at the outputs and hence at the inputs of the comparators.

When then the switch 230 is actuated the reset inputs of the counter 213 become L, the E-O input of the multiplexer 216 becomes H, whereas the output (W) becomes L so that the trigger 233 stops. At the same time, however, the switch 230 applies a pulse to the trigger input of the counter 213 so that the counter leaps to the binary digit 1, the outputs 1 of the demultiplexers 214 and 215 become L and the output (W) of the multiplexer 216 becomes H so that the counter 213 produces pulses. The counter 213 steps on in increments and the output of the corresponding gate 219 and 221 respectively provides H level, which also reaches the corresponding input of the corresponding latches 239, 240. The output 5 of the comparator 242 thus gets H level, but since one of the inputs of the gate 244 and an input of the gate 246 are invariably at H level (originating from the W output of the multiplexer 216), the output of the gate 244 and that of the gate 246 remain at L level so that the motors 203 and 163 remain stationary. However, when the trigger 213 attains the preselected value 9, the input (W) of the multiplexer 216 becomes L so that the trigger 233 stops. The output of the gate 219 or 221 respectively corresponding to the output 9 of the demultiplexer 214 or 215 respectively has become H as well as the input of the contact switch 206 (a) and 206 (r). Then, however, the input of the gate 244 and 246 connected to the output (W) becomes H.

Since the sequence of levels at the inputs of the switches 206 and 209 may be considered to be binary words (the switches 206(d) and 209(v) being the most significant), the A inputs of the comparators 247 and 248 hub a word greater than that at the associated B inputs. The output of the switch 206(a) already depressed provides at the output 227 an H signal which keeps the drive of the motor 203 switched out, whilst at this instant the contact switch r of the group 209 is not yet depressed. Since the binary word at the A inputs of the comparators 247 and 248 is greater than that at the B inputs, the gate 250 provides an H signal, since one of its inputs is then connected to the L-level output (W) of the multiplexer 216, the H signal at the output of the gate 250 drives the motor 163 so that the arm 147 is displaced towards the switch r. As soon as the extension 211 depresses the switch 209 (r), the printed conductor 224 and the printed conductor 223 are at H level. The branch 228 is then also at H level so that the drive of the motor 163 is stopped at the depressed switch p. Since the conductors 223 and 224 are at H level, the gate 236 supplies L level and since the other input of the gate 237 is also at L level (output (W) of the multiplexer 216), the output 238 provides an L-signal which opens a hydraulic cock, transmitting working pressure to the inlet of cylinder 170 starting the cutting cycle of the cylinder 170. This cutting cycle can thus be started only when the two conductors 223 and 224 are at H level, that is to say, when it is ensured that the two co-ordinates of the cutting member 168 have been reached. When the piston of the cylinder 170 has returned to its upper end position, the proximity switch 235 provides a pulse to the trigger input of the counter 213 and also to the enable inputs of the latches 239 and 240 so that the word at the data inputs is applied to the Q outputs of these latches and hence also to the B inputs of the comparators. The A and B words at the comparators are then equal so that the H signal at the output 5 of the comparators 242 and 248 disappears. The pulse at the counter 213 has raised it to the non-preselected position 10, as a result of which the (W) output of the multiplexer 216 is at H level so that the trigger 233 applies a pulse to the input of the counter 213, which thus leaps to the position 11. Prior to the start the switch 217 bearing the number 11 had H level so that the (W) output of the multiplexer 216 gets at L level and the trigger 233 stops. The outputs 11 of the demultiplexers 214 and 215 are then at L level and the associated inputs of the corresponding gates 219 and 221 are at H level so that in this case the inputs of the switches 206(a) and 299(t) are at H level as well as the data inputs of the corresponding latches and the associated bits of the A word of the comparators. The B word of a comparator still has the preceding value transmitted by the pulse emanating from the proximity switch 235. The comparators 241 and 242 state that the A word and the B word are the same (since the switch 206(a) is still depressed), but the comparators 247 and 248 state that the word formed by the switch 209(p—v) at the A input is now greater than the word at the B inputs, which still corresponds to the preceding cutting position. Since the output W of the multiplexer 216 is now at L level, the gate 250 supplies H level so that the motor 163 is switched on in a direction such that the arm 147 moves along the carrier beams 145 towards the switch 209(t). When the extension 211 has closed the switch 209(t), the conductor 244 is at H level as well as (still) the conductor 223 so that the gate 236 is at L level and the output 238 of the gate 237 is at L level, since the (W) output of the multiplexer 216 is at L level. As a result the inlet of cylinder 170 is again exposed to working pressure so that this cutting cylinder and the blade 195 perform an outward and an inward stroke. When the blade is again in its upper end position, the proximity switch 235 applies a pulse stepping on the counter 213 to 12, but since this position is not preselected, the (W) output of the multiplexer 216 is at H level. The pulse emanating from the switch 235 passes on the preceding position 206(a) and 209(t) (at the B inputs of the comparators) since the input information is thereby applied to the Q outputs of the latches. Since the (W) output of the multiplexer 216 is at H level, the trigger supplies again a pulse stepping on the counter to 13, which has been preselected so that the (W) output of the multiplexer 216 has again L level. The gates 219 and 221 corresponding to the outputs 13 of the demultiplexers 214 and 215 go to H level so that the inputs of the contact switches 206(b) and 209(s) are also at H level. The binary word at the A inputs of the comparators 241 and 242 is now greater than the word still present at the B inputs (originating from the position 11 in Figure 9) so that the output of the gate 244 goes to H level, since the (W) output of the multiplexer 216 is in the meantime at L level. The motor 203 is then driven in the direction such that the cutting member 168 moves towards the switch 206(b). Since the signal at the input of the switch 209(s) then forms the most signifciant bits of the word at the A inputs of the comparators 247 and 248 and this word is smaller than in the preceding working position 11 (switch 209(t)), the output 7 of the comparator 248 supplies an H signal so that the output of the gate 252 is at H level and the motor 163 rotates in reverse towards the contact switch 209(s).

When the stop 208 has depressed the contact pin of the contact switch 206(b), the conductor 223 is at H level and so also is the branch 227, the motor 203 being thus stopped. When the extension 211 has depressed the switch 209(s), the conductor 224 is at H level so that with regard to the L signal at the output (W) of the multiplexer 217 the output 238 of the gate 237 becomes L and the cutting cycle is started. The gate 236 ensures that this can only occur when the cutting element 168 has reached the two desired co-ordinates. These co-ordinates represented by the H levels at the inputs of the switches 206(b) and 209(s) are at the A inputs of the comparators. The H signal at the conductor 224 causes, through the branch 228, the motor 163 to stop when the switch 209(s) is depressed.

In the position 13 of Figure 9, as stated above, the input of the switch 206(b) has an H signal and the further switches 206 have an L signal. Thus the output of the gate 232 is at H level as a result of which the cylinder 184 is energized in the inward sense for the piston rod so that the adjusting ring 179 (Figure 3) is turned with the blade 195, through 90°. At the end of the inward stroke of the piston rod or the cylinder 184, the working pressure remains prevailing in the cylinder 184 and urges the piston rod and hence also the blade 195 against a stop formed by an end of the cylinder 184. The position of the blade in the position 13 of the cutting element 168 then corresponds to the position shown in Figure 9. The swinging movement of the cylinder 170 and the blade 195 is performed during the time in which the cutting member 168 is moving towards the position 13 so that the displacement time of the cutting member is utilized for turning the blade.

When the blade again approaches its uppermost position, the proximity switch 235 supplies a pulse stepping on the counter to the binary number 14, so that the output (W) of the multiplexer 216 goes to H level and the trigger 233 produces a pulse stepping on the counter to the binary number 15, which, in this embodiment, is an unused possible position. The output (W) of the multiplexer 216 remains at H level, since the input E-15 is connected to H level. The next pulse of the trigger 233 causes the counter to step to O, since the counter is full. The gate 229 obtains an H signal at both inputs (from the outputs O of the demultiplexers 214 and 215 through the associated gates 218 and 220 respectively) and hence also at the output, as a result of which the reset inputs of the counter 213 reach H level and the counter stops. In the meantime the inputs of the contact switches 206(c, o, a) and 209(o) have H level, whilst also the least significant bits of the A words of the comparators are also at H level. These A words are, therefore, smaller than the B words corresponding to the last working position used, position 13, passed on by the last pulse from the proximity switch 235. The outputs 7 of the comparators 242 and 248 are thus at H level as well as the outputs of the gates 246 and 252, as a result of which the two motors 163 and 203 are driven in a direction such that the cutting member 168 is displaced towards the position O. When the contact switches 206(o, a) and 209(o) are depressed, the conductors 223 and 224 are at H level and hence also the branches 227 and 228 which cause the motors 203 and 163 respectively to stop. The gate 231 has at one of the inputs an L signal so that the output of the gate 231 becomes H, so that the valve associated with the cylinder 184 is changed over and the piston rod moves outwards. The cutting cylinder 170 and the blade 195 thus turning back into the position associated with the position O of Figure 9. The cutting member returns from the last working position (in this case position 13) automatically and directly to the initial position O.

In the position O the reset inputs of the counter 213 have an H signal, as stated above, and the input E-O of the multiplexer 216 (resulting from the gate 253) has an L signal so that the output (W) of the multiplexer 216 has an H signal and in this reset position no cuts can be made despite the fact that the corresponding contact switches 206 and 209 are closed and the conductors 223 and 224 have an H signal.

The preprogrammed cutting operation of the block bounded by the cuts 9, 11, 13 of Figure 19 has thus terminated. Cutting of a block of maximum size (Positions 1 to 7 and back to the O position) is also carried out in the same manner; the cutting positions then directly succeed one another and from position 7, as in the example described above, an automatic return is made to the position O. The whole programme thus terminates automatically in the position O.

The upwardly extending cylinder 170 might be a hindrance when the silage cutter passes through low doors and the like. In order to move the cutting cylinder 170 into a transport position in which the cylinder does not project above the rest of the silage cutter, the operator can turn the pawl 188 (Figure 3) about the pivotal shaft 187 by electrical or mechanical means, for example, by means of a Bowden cable, so that the part of the pawl 188 located below the rib 181 is retracted. The whole cutting cylinder 170 together with the blade 195 drops down, sliding in the sleeve 175 (Figure 5) and guided by the insert rings 176 in the sleeve 175 until an upper flange of the cutting cylinder 170 bears on the ring 180. If desired, turning of the pawl 188 may be activated in response to the presence of an H signal at the two conductors 223 and 224 of Figure 8 and at the reset junctions of the counter 213. The connection of these conductors to an AND gate would cause the output of this gate to be at H level so that the pawl 188 can be energized. If desired, a spring element may be arranged on the ring 180 of Figure 3 for receiving the upper flange of the cutting cylinder 170, when the latter drops into the transport position as described.

When a new cycle is started in which case the switch 230 of Figure 8 is changed over so that the reset inputs of the counter 213 are again at L level, the input E-O of the multiplexer 216, owing to the presence of the gate 253, goes to H level and the output (W) of the multiplexer 216 goes to L level. Since in the zero position the contact switches 206(o) and 209(o) are depressed, an H signal being at the input of these switches, the conductors 223 and 224 have an H signal so that the output 238 of the gate 237 has an L signal and in the O position a cutting cycle is initiated. In this case this means, however, that the blade of the cutting cylinder 170, which is in the transport described above, remains on the ground and the cylinder 170 is displaced until the pawl 188 (Figure 3) re-enters the space below the rib 181 under the tension of the compression spring 189 so that the cutting cylinder 170 regains its working position. The subsequent, second part of the cutting cycle of the cylinder 170 causes the blade 195 to move upwards in the cylinder 170 so that the starting position of the cutting member 168 is regained for performing a further, preprogrammed cutting process. In contrast to known silage cutters, in which an additional hydraulic control is provided for turning the cutting cylinder 170 into a horizontal position, the transport position is obtained here by the same means as those used for the normal operation, and the transport position can be automatically obtained and automatically undone at the beginning of a new cutting process.

The preprogrammed sequence of cuts is set with the aid of a control box connected through flexible, electric cables with the silage cutter so that the operator can position the control box in the tractor cab. The control panel of the control box has generally the appearance shown in Figure 9, showing the potential cutter positions, whilst at the centre of each cutting position there is a switch 217 (numbers 1 to 14) arranged at the places indicated in Figure 9 by circles. The panel is furthermore provided with the switch 230. The operator need only operate the switches associated with the desired cutting positions and depress the switch 230 (which returns by spring tension into the initial position) to cause the cutting process to take place automatically, including the automatic return of the cutting member to the initial position and, as the case may be, of the cutting cylinder 170, to the low transport position.

In this embodiment the block of maximum size (numbers 1 to 7) can be cut into six small blocks. Of course, the equipment could be modified to provide the possibility of cutting the block into a larger number of small blocks. With the electronic system this requires generally only an increase in the capacity of the demultiplexers and multiplexers, the counter and the comparators, as well as a larger number of gates and latches, but the circuit principle remains unchanged, from an electronic point of view such an extension does not give rise to difficulties.

The above-described, fully automated sequence of displacements and cutting cycles of the cutting member (around the periphery of a block of maximum size as well as inside the periphery of the block to obtain smaller blocks) and the automatic change-over of the cutting cylinder into the transport position may, in principle, also be used in the case in which a saw is used rather than a blade for sawing out the block or the small blocks. In the case of a saw, however, the cutting element should also be operative during its displacement to the various positions forming in this case corners of the block or blocks to be severed.

Known silage cutters have the disadvantage that in the case of high silos it is not possible to cut at a relatively great height above the ground using a tractor since the blade positions have to be accurately set manually by the operator in order to achieve the required overlap of successive blade positions. When cutting from high silos, the setting cannot be observed by the operator sitting in the tractor cab. This problem is solved by the automatic performance of the cutting and displacing operations of the silage cutter described above, since the operative part of the silage cutter can be displaced upwards along the framework 131 by the cylinder 142 (Figure 2), which is actuable from the tractor cab, and subsequently can be inserted at a distance above the ground into the silage, after which the automatic cutting operation described above can be carried out out of sight of the operator.

The cutting member 168, comprising the cutting, pivot and displacing means 170, 184, 203, could be provided with respect to the framework 131 in an alternative way. Two parallel horizontally extending supporting beams could be rigidly connected to both upright sides of the framework 131 at a distance above the fork prongs 143. In this embodiment a substantially horizontal arm is arranged between, and perpendicular to both supporting beams, this arm therefore being parallel to the framework 131. The arm is supported on the supporting beams by rollers and is movable in a direction perpendicular to a plane which is parallel to the framework 131. This arm carries the cutting member 168, which is movable along the arm on rollers. The drive of the arm along the supporting beams and the drive of the cutting member along the arm are achieved in an analogous manner to that described with regard to the embodiment shown (compare the function of the motors 163, 203). In this alternative embodiment, the switches 206 (in this alternative embodiment mounted on the arm) and the switches 209 (in this alternative embodiment mounted on one of the supporting beams) perform functions which are also analogous to those which are described with resepct to the embodiment shown.

## Claims

1. A silage cutter comprising a support for a cutting member (168), said support being constructed of beams (145) and an arm (147), the substantially horizontal arm extending substantially perpendicular to said beams which are also substantially horizontal in operation, and the cutting member (168) being movable with respect to said arm and beams, the cutting member supporting a cutting element (195) having a substantially horizontal cutting edge (196) and being movable upwardly and downwardly with respect to the cutting member to perform cutting strokes and the cutting member being displaceable into different cutting positions along the path of a silage block to be cut from a bulk mass of silage; actuating means (170, 184, 163, 203) being provided to cause cutting strokes and displacements to succeed one another automatically in a sequence along at least a part (1 to 14; Fig. 9) of said path and to turn the cutting element (195) over 90° with respect to the extension of the arm and beams respectively, characterized in that the beams (145) and the arm (147) are provided with position indicating switching means (206, 209) establishing actual positions of the cutting member (168) with respect to the support during operation, the position indicating switching means supplying input data to an electronic circuitry (212 to 252) controlling said automatic sequence along the whole path to be cut, without said sequence being interrupted.

2. A silage cutter as claimed in claim 1, characterized in that the position indicating switching means (206, 209) constitute a coordinate system defining possible operative positions of the cutting element (195), a desired sequence of which being preprogrammable.

3. A silage cutter as claimed in claim 2, characterized in that the circuitry (212 to 252) comprises comparators (241, 242, 247, 248) comparing the magnitude of first binary words provided by the position indicating switching means and defining an actual position of the cutting element (195), with the magnitude of second preprogrammed binary words, output data of the comparators actuating displacement of the cutting element.

4. A silage cutter as claimed in claim 2 or 3, characterized in that the sequence of operative positions of the cutting element (195) to be preprogrammed can be set with the aid of a control panel which is movable with respect to the remainder of the cutter.

## Patentansprüche

1. Silageschneider mit einem Träger für eine Schneidvorrichtung (168), wobei der Träger aus Balken (145) und einem Arm (147) besteht, der im wesentlichen horizontal und rechtwinklig zu den in Arbeitsstellung ebenfalls im wesentlichen horizontalen Balken liegt, und wobei die Schneidvorrichtung (168) in bezug auf den Arm und die Balken bewegbar ist und ein Schneidelement (195) trägt, das eine im wesentlichen horizontale Schneide (196) aufweist und in bezug auf die Schneidvorrichtung zum Ausführen von Schneidhüben aufwärts und abwärts bewegbar ist, und wobei die Schneidvorrichtung in verschiedene Schneidpositionen entlang der Bahn eines Silageblockes verlagerbar ist, der von einer Silagemasse abzutrennen ist; es sind Betätigungsmittel (170; 184, 163, 203) vorgesehen, um Schneidhübe und Verlagerungen in automatischer Aufeinanderfolge über mindestens einen Teil (1 bis 14, Fig. 9) der Bahn auszulösen und das Schneidelement (195) in bezug auf die Erstreckung des Armes und der Balken um 90° zu drehen, dadurch gekennzeichnet, daß die Balken (145) und der Arm (147) mit Positionsanzeige-Schaltern (206, 209) versehen sind, welche die jeweilige Position der Schneidvorrichtung (168) relativ zu dem Träger während des Betriebes erfassen und an eine elektronische Schaltung (212 bis 252) Eingangsdaten liefern zur Steuerung der genannten automatischen Aufeinanderfolge entlang der gesamten Schnittbahn ohne Unterbrechung dieser Aufeinanderfolge.

2. Silageschneider nach Anspruch 1, dadurch gekennzeichnet, daß die Positionsanzeige-Schalter (206, 209) ein Koordinaten-System bilden, das die möglichen Arbeitspositionen des Schneidelementes (195) definiert, wobei eine gewünschte Aufeinanderfolge der Arbeitspositionen programmierbar ist.

3. Silageschneider nach Anspruch 2, dadurch gekennzeichnet, daß die Schaltung (212 bis 252) Vergleicher (241, 242, 247, 248) enthält, welche die Größe von ersten Binärsignalen, die von den Positionsanzeige-Schaltern geliefert werden und eine aktuelle Position des Schneidelementes (195) definieren, mit der Größe von zweiten, programmierten Binärsignalen vergleicht, und daß die Ausgangsdaten der Vergleicher die Verlagerung des Schneidelementes auslösen.

4. Silageschneider nach Anspruch 1 oder 2, dadurch gekennzeichnet, daß die vorprogrammierbare Reihenfolge von Arbeitspositionen des Schneidelementes (195) mittels einer Schalttafel einstellbar ist, die in bezug auf den übringen Teil des Silageschneiders lageveränderbar ist.

## Revendications

1. Découpeuse de fourrage ensilé comprenant un support pour un organe de coupe (168), ledit support étant constitué de poutres (145) et d'un bras (147), le bras sensiblement horizontal s'étendant sensiblement perpendiculairement auxdites poutres qui sont, elles aussi, sensiblement horizontales pendant le travail, et l'organe de coupe (168) étant mobile par rapport audit bras et auxdites poutres, l'organe de coupe supportant un élément de coupe (195) ayant un tranchant (196) sensiblement horizontal et pouvant monter et descendre par rapport à l'organe de coupe pour exécuter des mouvements de coupe, et l'organe de coupe pouvant être déplacé en différentes positions de coupe le long du trajet d'un bloc de fourrage ensilé qu'il s'agit de découper dans une masse volumineuse de fourrage ensilé, des moyens actionneurs (170; 184, 163, 203) étant prévus pour faire que les mouvements de coupe et les déplacements se succèdent automatiquement selon une séquence le long d'au moins une partie (1 à 14; Figure 9) dudit trajet et pour faire tourner l'élément de coupe (195) sur 90° par rapport à l'extension respective du bras et des poutres, caractérisée en ce que les poutres (145) et le bras (147) sont munis de moyens de commutation indicateurs de position (206, 209) établissant les positions réelles de l'organe de coupe (168) par rapport au support pendant le travail, les moyens de commutation indicateurs de position fournissant des données d'entrée à un ensemble de circuits électroniques (212 à 252) commandant ladite séquence automatique le long de tout le trajet destiné à être découpé, sans que ladite séquence soit interrompue.

2. Découpeuse de fourrage ensilé selon la revendication 1, caractérisée en ce que les moyens de commutation indicateurs de position (206, 209) constituent un système de coordonnées définissant les positions possibles de travail de l'élément de coupe (195), une séquence désirée de celles-ci étant programmable à l'avance.

3. Découpeuse de fourrage ensilé selon la revendication 2, caractérisée en ce que l'ensemble des circuits électroniques (217 à 252) comprend des comparateurs (241, 242, 247, 248) comparant la grandeur des premiers mots binaires fournis par les moyens de commutation indicateurs de position et définissant une position réelle de l'élément de coupe (195) avec la grandeur de seconds mots binaires programmés à l'avance, les données de sortie des comparateurs actionnant le déplacement de l'élément de coupe.

4. Découpeuse de fourrage ensilé selon la revendication 2 ou 3, caractérisée en ce que la séquence des positions de travail de l'élément de coupe (195) destinée à être programmée à l'avance peut être établie à l'aide d'un panneau de commande qui est mobile par rapport au restant de la découpeuse.

FIG.1

FIG.6

FIG.7

EP 0 092 880 B1

FIG.2

2

FIG. 3

EP 0 092 880 B1

FIG.4

FIG.5

4

EP 0 092 880 B1

FIG.8

5

EP 0 092 880 B1

FIG.9

6